# EUROPÄISCHE PATENTSCHRIFT

(11) **EP 0 450 108 B1**
(45) Veröffentlichungstag und Bekanntmachung des Hinweises auf die Patenterteilung: **27.07.1994**
(21) Anmeldenummer: 90106222.4
(22) Anmeldetag: 31.03.1990
(51) Int. Cl.: G05D 16/20, F15B 15/24

(54) **Vorrichtung zur Hubbegrenzung**
Stroke limiting device
Dispositif de limitation de course

(43) Veröffentlichungstag der Anmeldung: 09.10.1991
(73) Patentinhaber: HONEYWELL B.V., NL-1101 EA Amsterdam (NL)
(72) Erfinder: Kragten, Cornelis Anthonius, NL-7824 XV Emmen (NL)
(74) Vertreter: Rentzsch, Heinz, Dipl.-Ing.

(56) Entgegenhaltungen:
- EP-A- 0 039 000
- EP-A- 0 078 496
- EP-A- 0 127 854
- FR-A- 1 232 866
- US-A- 3 430 538

## Beschreibung

Bei Ventilen, Druckreglern und anderen mit einem längsverschieblich gelagerten Bauteil ausgerüsteten Geräten ist vielfach eine Begrenzung des zulässigen Hubes sowie eine Einstellung der Lage des Hubbereichs zwischen den beiden Grenzstellungen bezogen auf das Gerät erforderlich (Siche US-A-3430538. Der Erfindung liegt die Aufgabe zugrunde, für eine Vorrichtung gemäß Gattungsbegriff des Anspruchs 1 eine möglichst einfache Lösung zu finden, welche gleichwohl eine genaue und reproduzierbare Einstellung gewährleistet, leicht zu bedienen ist und wenig Platz beansprucht. Diese Aufgabe wird gelöst durch die im Anspruch 1 gekennzeichnete Erfindung. Vorteilhafte Ausgestaltungen und Weiterbildungen ergeben sich aus den Unteransprüchen. Die Erfindung wird nachfolgend anhand eines in der Zeichnung wiedergegebenen Ausführungsbeispiels erläutert. Darin zeigt:
- Fig.1: einen Schnitt durch die Einstellvorrichtung;
- Fig.2: einen hierzu rechtwinkelig gesetzten Schnitt durch die Anschlagstücke und die Tauchspule;
- Fig.3: eine Draufsicht auf die Einstellvorrichtung;
- Fig.4: eines der Anschlagstücke in Draufsicht; und

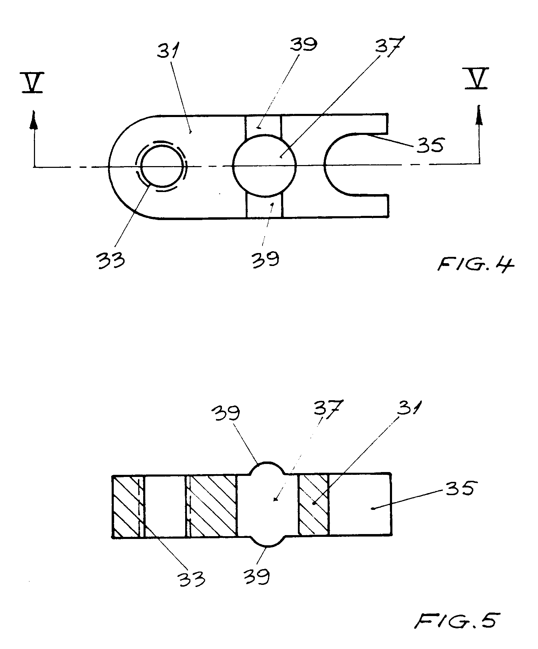

- Fig.5: das Anschlagstück im Schnitt längs der Linie V-V.

Das Ausführungsbeispiel zeigt den Tauchspulantrieb für einen im einzelnen nicht dargestellten Druckregler 1. Auf dessen Gehäuse ist mit einem Ansatz 2 das Joch 3 des Magnetkreises für die Tauchspule 4 aufgesetzt und durch einen O-ring 5 abgedichtet. Der Magnetkreis umfaßt außer dem genannten Joch einen mit diesem einstückig ausgebildeten zentralen Kern 6, eine Jochplatte 7 sowie einen zwischen dieser und dem Joch 3 angeordneten ringförmigen, in Achsrichtung magnetisierten Dauermagneten 8. Die Tauchspule 4 ist im Luftspalt 9 zwischen Jochplatte 7 und Kern 6 gegen die Kraft einer im Druckregler 1 vorgesehenen Feder 11 verschiebbar, während eine zusätzliche schwache Feder 12 das Eigengewicht der Tauchspule 4 und ihres Trägers 13 kompensiert. Der Betätigungsstift 14 ist im Boden 15 der Tauchspule befestigt. Der Betätigungsstift 14 wirkt in bekannter Weise auf die Membran des Druckreglers 1 ein. Er ist mit seinem unteren Teil in einer öffnung 16 im Joch 3 und an seinem oberen Ende 38 durch die Tauchspule 4 geführt.

An der Jochplatte 7 ist mittels der Niete 17 ein Träger 18 in Form eines Dreibeins befestigt, in dessen Deckplatte 19 zwei Löcher angebracht sind, durch welche die Einstellköpfe 20 und 21 der beiden Einstellschrauben 22 und 23 hindurchragen. Beide Einstellköpfe sind mit einem Schraubendreherschlitz versehen. Die gegenüberliegenden Enden dieser Einstellschrauben 22 und 23 sind in Vertiefungen 24 bzw. 25 auf der Oberseite des zentralen Jochs 6 drehbar gelagert, während sie sich am Einstellende mit je einem umlaufenden Kragen 26 bzw. 27 über einen O-Ring 28 bzw. 29 an der Deckplatte des Haltebügels 18 abstützen. Sie sind also gehäusefest drehbar aber nicht längsverschiebbar gehalten und parallel zueinander und zur Verschieberichtung der Tauchspule ausgerichtet.

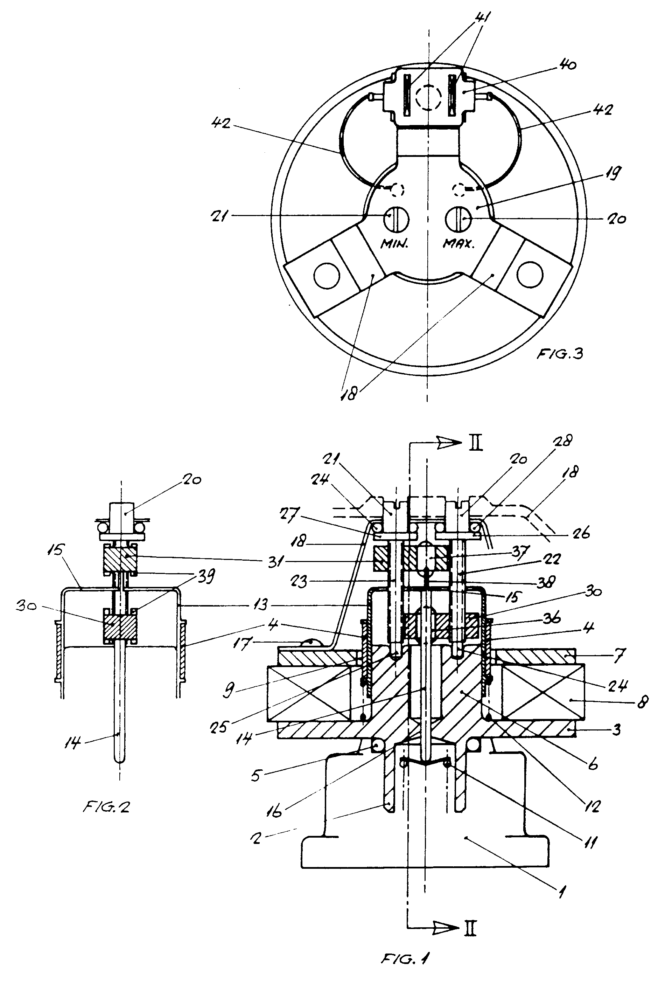

Der Hub der Tauchspule 4 und damit des Betätigungsstifts 14 läßt sich mittels zweier Anschlagstücke 30 und 31 einstellen und zwar sowohl hinsichtlich seiner Größe als auch hinsichtlich seiner Anfangs- und Endlage. Dabei sitzt das Anschlagstück 31 (vgl. Fig. 4) mit seinem Innengewinde 33 auf der Einstellschraube 23 und wird mit seinem gabelförmigen Ende 35 von der anderen Einstellschraube 22 gegen Verdrehen gesichert geführt. Anstelle eines gabelförmigen Schlitzes am Ende des Anschlagstücks 31 kann auch eine gewindefreie Durchgangsöffnung als Führung und Verdrehungssicherung vorgesehen sein. Umgekehrt läßt sich das Anschlagstück 30 mit seinem Innengewinde auf der Einstellschraube 22 entlangschrauben, weil es durch sein gabelförmiges Ende mittels der Einstellschraube 23 gegen Verdrehen gesichert ist.

Mit dem unteren Anschlagstück 30 läßt sich somit über die Einstellschraube 22 der untere, beispielsweise den maximalen Ausgangsdruck des Druckreglers 1 bestimmende Endpunkt des Hubes der Tauchspule 4 bestimmen, während mit der anderen Einstellschraube 23 und dem auf ihr entlangschraubbaren Anschlagstück 31 der obere Begrenzungspunkt des Hubes verstellbar ist. Dabei sind beide Anschlagstücke 30 und 31 gleich gestaltet und jeweils mit einer zentralen Durchgangsöffnung 36 bzw. 37 für die Betätigungsstange 14 versehen. Letztere ragt mit einem Ansatz 38 durch ein entsprechendes Loch im Boden 15 des Tauchspulträgers 13 hindurch. Um eine definierte Anlage der Tauchspule an den Anschlagstücken 30 bzw. 31 zu gewährleisten, sind diese mit Rippen 39 versehen, gegen welche sich der Tauchspulträger 13 legt.

Um eine sinnfällige Einstellung des Druckes am Ausgang des Druckreglers zu ermöglichen, derart, daß ein Rechtsdrehen der Einstellschraube den jeweiligen Druckwert verringert und eine Linksdrehung den jeweiligen Druckwert (Minimumdruck oder Maximumdruck) erhöht, empfiehlt es sich, die beiden Einstellschrauben 22 und 23 und die entsprechenden Gewinde in den Anschlagstücken 30 und 31 als Linksgewinde auszubilden. Statt dessen können die Einstellschrauben auch mit normalem Rechtsgewinde oder die eine Einstellschraube mit Linksgewinde und die andere mit Rechtsgewinde versehen sein. Die Einstellung der beiden Hubgrenzen ist voneinander unabhängig. Für die Stromzuleitung zur Tauchspule 4 ist am Träger 18 ein Anschlußblock 40 befestigt, dessen Kontaktbuchsen 41 über rückstellkraftarme, flexible Leitungen 42 mit der Tauchspule 4 elektrisch verbunden sind (vgl. Fig. 3).

## Patentansprüche

1. Vorrichtung zum Einstellen und Begrenzen des Hubes eines längsverschieblich gelagerten Bauteils, insbesondere der Tauchspule (4, 13) eines elektrisch steuerbaren Druckreglers, unter Verwendung von zwei verstellbaren Anschlägen (30, 31), zwischen denen das Bauteil verschiebbar ist, **dadurch gekennzeichnet,** daß
a) das Bauteil (4, 13, 15) von zwei parallel zueinander und zur Verschiebeachse des Bauteils gehaltenen und gegen Längsverschiebung gesicherten Einstellschrauben (22, 23) berührungsfrei durchsetzt ist;
b) beide Anschlagstücke (30, 31) jeweils mit einem Innengewinde (33) zur Aufnahme einer der Einstellschrauben (22, 23) versehen sind;
c) jedes Anschlagstück (30, 31) eine gewindefreie Durchgangsöffnung (35) aufweist, durch welche jeweils die andere Stellschraube als Verdrehungssicherung für das Anschlagstück hindurchragt;
d) das eine Anschlagstück (30) mit seinem Innengewinde auf der ersten Stellschraube (22) sitzt, sowie mit seiner gewindefreien Durchgangsöffnung durch die zweite Stellschraube (23) gegen Verdrehen gesichert ist, während das andere Anschlagstück (31) mit seinem Innengewinde auf der zweiten Stellschraube (23) sitzt, sowie mit seiner gewindefreien Durchgangsöffnung durch die erste Stellschraube (22) gegen Verdrehen gesichert ist.

2. Vorrichtung nach Anspruch 1, **dadurch gekennzeichnet,** daß die gewindefreie Durchgangsöffnung durch eine gabelförmige Ausnehmung (35) am Ende des Anschlagstücks (31) gebildet ist.

3. Vorrichtung nach Anspruch 1 oder 2, **dadurch gekennzeichnet,** daß beide Einstellschrauben (22, 23) vom gleichen Ende (20, 21) her verstellbar, z.B. mit einem Schraubendreherschlitz versehen sind.

4. Vorrichtung nach Anspruch 1, 2 oder 3, **dadurch gekennzeichnet,** daß wenigstens eine der Einstellschrauben (22, 23) mit Linksgewinde versehen ist.

5. Vorrichtung nach einem der Ansprüche 1 bis 4 zur Hubeinstellung einer Tauchspule (4), **dadurch gekennzeichnet,** daß die beiden Einstellschrauben (22, 23) mit ihrem einen Ende im zentral Joch (6) des den Luftspalt (9) für die Tauchspule (4) bildenden Magnetkerns (3, 6, 7, 8) drehbar gelagert sind und sich mit ihren anderen, zur Einstellung zugängigen Enden (20, 21) an einem auf den Magnetkreis aufgesetzten Haltebügel (18, 19) abstützen.

6. Vorrichtung nach Anspruch 5, **gekennzeichnet durch** eine unter der Tauchspule (4, 13) angeordnete Feder (12) zur Gewichtsentlastung.

7. Vorrichtung nach Anspruch 5 oder 6, **dadurch gekennzeichnet,** **kennzeichnet,** daß an dem von den beiden Einstellschrauben (22, 23) berührungsfrei durchsetzten Boden (15) des Tragkörpers (13) für die Tauchspule (4) eine Betätigungsstange (14, 38) befestigt ist, welche durch das zentrale Joch (6) geführt hindurchragt und auf die Membran eines Druckreglers (1) einwirkt.

## Claims

1. Device for adjusting and limiting the stroke of a longitudinally displaceable component, in particular the moving coil (4, 13) of an electrically controllable pressure regulator, using two adjustable abutments (30, 31) between which abutments the component is movable, **characterized in that**
a) two adjusting screws (22, 23) touch-free project through said component (4, 13, 15), whereat the two adjustment screws are arranged in parallel to each other and with respect to the displacement axis of the component and are protected against longitudinal movement;
b) both abutment pieces (30, 31) have an internal thread (33) for accepting one of the adjusting screws (22, 23);
c) each abutment piece (30, 31) has a non-threaded through hole (35) through which the other adjusting screw projects for preventing the abutment piece from turning movement;
d) the one abutment piece (30) is provided with its internal thread on the first adjusting screw (22) and is secured against turning by the second adjusting screw (23) projecting through the non-threaded through hole of said abutment piece, whereat the other abutment piece (31) is located with its internal thread on the second adjusting screw (23) and is secured against turning movement by its non-threaded through hole, through which the first adjusting screw (22) projects.

2. Device according to claim 1, **characterized in that** the non-threaded through hole is formed by a fork-shaped recess (35) at the end of the abutment piece (31).

3. Device according to claim 1 or 2, **characterized in that** both adjusting screws (22, 23) are adjustable from the same end (20, 21), e.g. are provided with a screw driver slot.

4. Device according to claim 1, 2 or 3, **characterized in that** at least one of the adjusting screws (22, 23) is provided with a left hand thread.

5. Device according to one of the claims for the stroke adjustment of a moving coil (4), **characterized in that** each of the adjusting screws (22, 23) is turnably supported with its one end within the central yoke (6) of the magnetic core (3, 6, 7, 8) constituting the air gap (9) for the moving coil (4) and that the adjustment screws with their opposite ends (20, 21), which are accessible for adjustment, abut against a holding stirrup (18, 19) supported by the magnetic circuit.

6. Device according to claim 5, **characterized by** a spring (12) located below the moving coil (4, 13) for weight compensation.

7. Device according to claim 5 or 6, **characterized in that** an operating rod (14, 38) is fixed to the bottom (15) of the support member (13) of the moving coil (4), whereat the two adjustment screws (22, 23) project touch-free through said bottom and the operating rod is guided by and projects through the central yoke (6) and acts upon the diaphragm of a pressure regulator (1).

## Revendications

1. Dispositif pour régler et limiter la course d'une pièce montée en coulissement longitudinal, notamment la bobine mobile (4, 13) d'un régulateur de pression pouvant être commandé de manière électrique, grâce à la mise en oeuvre de deux butées réglables (30, 31), entre lesquelles la pièce peut coulisser, caractérisé
a) en ce que la pièce (4, 13, 15) est traversée sans contact, par deux vis de réglage (22, 23), qui sont maintenues parallèles l'une par rapport à l'autre et par rapport à l'axe de coulissement longitudinal de la pièce, et qui sont bloquées à l'encontre d'un coulissement longitudinal;
b) en ce que les deux pièces de butée (30, 31) sont pourvues chacune d'un filetage intérieur (33), destiné à recevoir l'une des vis de réglage (22, 23);
c) en ce que chaque pièce de butée (30, 31) comporte une ouverture de passage (35) non filetée, au travers de laquelle passe respectivement l'autre vis de réglage en formant un arrêt en rotation pour la pièce de butée;
d) en ce qu'une pièce de butée (30) est montée, par son filetage intérieur, sur la première vis de réglage (22), et est bloquée en rotation, par l'intermédiaire de son ouverture de passage non filetée, par la seconde vis de réglage (23), tandis que l'autre pièce de butée (31) est montée, par son filetage intérieur, sur la seconde vis de réglage (23), et est bloquée en rotation, par l'intermédiaire de son ouverture de passage non filetée, par la première vis de réglage (22).

2. Dispositif selon la revendication 1, caractérisé en ce que l'ouverture de passage non filetée, est formée par un évidement (35) en forme de fourche, à l'extrémité de la pièce de butée (31).

3. Dispositif selon la revendication 1 ou 2, caractérisé en ce que les deux vis de réglage (22, 23) sont réglables à partir de la même extrémité (20, 21), par exemple en étant pourvues d'une fente pour tournevis.

4. Dispositif selon la revendication, 1, 2 ou 3, caractérisé en ce que l'une au moins des vis de réglage (22, 23) est munie d'un filetage à gauche.

5. Dispositif selon l'une des revendications 1 à 4, destiné au réglage de la course d'une bobine mobile (4), caractérisé en ce que les deux vis de réglage (22, 23), sont montées tournantes par l'une de leurs extrémités, dans la culasse centrale (6) du noyau d'aimant (3, 6, 7, 8) formant l'entrefer (9) pour la bobine mobile (4), et s'appuient, par leurs autres extrémités (20, 21) accessibles pour le réglage, sur un étrier de retenue (18, 19) rapporté sur le circuit magnétique.

6. Dispositif selon la revendication 5, caractérisé par un ressort (12) disposé sous la bobine mobile (4, 13), en vue de réaliser un délestage de poids.

7. Dispositif selon la revendication 5 ou 6, caractérisé en ce que sur le fond (15) du corps de support (13) pour la bobine mobile (4), traversé sans contact par les deux vis de réglage (22, 23), est fixée une tige d'actionnement (14, 38), qui fait saillie au travers de la culasse centrale (6) en y étant guidée, et agit sur la membrane d'un régulateur de pression (1).
